# EUROPEAN PATENT SPECIFICATION

(11) **EP 1 830 538 B1**
(45) Date of publication and mention of the grant of the patent: **22.06.2011**
(21) Application number: 06761568.2
(22) Date of filing: 25.07.2006
(51) Int. Cl.: H04L 29/06

(54) **A METHOD FOR DYNAMIC CONTENT DELIVERY AND A DYNAMIC CONTENT TRANSMISSION SERVER**
VERFAHREN ZUR DYNAMISCHEN INHALTSLIEFERUNG UND DYNAMISCHER INHALTSÜBERTRAGUNGSSERVER
PROCEDE D'ADMINISTRATION DE CONTENU DYNAMIQUE ET SERVEUR DE TRANSMISSION DE CONTENU DYNAMIQUE

(30) Priority: 30.09.2005 CN 200510105909
(43) Date of publication of application: 05.09.2007
(73) Proprietor: Huawei Technologies Co., Ltd., Longgang District, Shenzhen Guangdong 518129 (CN)
(72) Inventor: PENG, Jin, Shenzhen, Guangdong 518129 (GB)
(74) Representative: Pfenning, Meinig & Partner GbR
(86) International application number: PCT/CN2006/001838
(87) International publication number: WO 2007/036114

(56) References cited:
- WO-A-01/77903
- CN-A- 1 339 752
- CN-A- 1 596 521
- US-A1- 2004 176 999
- US-B1- 6 633 915

## Description

### Field of the Invention

The present invention relates to dynamic content delivery based on the client/server architecture, and particularly to a method for sending dynamic content and a dynamic content delivery server.

### Background of the Invention

Content subscription is an existing communication service in the communications network, e.g., subscribing to an electric map, etc. The network side will send corresponding content to a user terminal according to the subscription requirements of the user. The subscription mode is relatively simple in that it is a subscription in a static sense, i.e. the corresponding content is sent upon the initiating of a user's subscription request, or the corresponding content is sent to the user terminal periodically according to the user requirements.

Dynamic content delivery is a technique of providing personalized content to a mobile terminal user based on the mode of client/server architecture. For example, there is such a requirement: in order to meet the real-time and personalization of the dynamic content delivery, when the server sends dynamic content subscribed by a user, the original content subscribed by the user has to be processed in a personalized manner according to the present information of the user, e.g. the user parameters, the user location, the online state, etc., and then transmitted to the user.
WO 01/77903 A discloses a system providing information to multiple subscribers. The system receives requests for different types of information from the subscribers and stores rules for delivering the requested information. The system gathers information from multiple information sources, packages at least some of the gathered information into customized bundles according to the received requests and the stored rules, and delivers the customized bundles to the subscribers according to the stored rules.
"Universal multimedia experiences for tomorrow", IEEE Signal Processing Magazine, IEEE Service Center, Postcode, NJ, US, published on 2003-03-01, authors: Burnett I.; Pereira; ISSN 1053-5888 discloses that for the user to obtain the best possible multimedia experience, it is essential that the content is adapted taking into account as many relevant usage environment parameters as possible. UMA requires a general understanding of personalization involving not only the user's needs and preferences but also the capabilities of the user's environment (e.g., the network characteristics; the terminal where the content will be presented and the natural environment where a user is located such as the location, temperature and altitude).

However, in the prior art, no corresponding operation criterion is specified to the method for storing and sending dynamic content.

### Summary of the Invention

The present invention provides a method for sending dynamic content and a dynamic content delivery server, implementing storage, processing and sending of the dynamic content subscribed by a user.

The method for sending dynamic content according to the present invention includes:

storing an original dynamic content subscribed to by a user;

creating and storing a corresponding relationship between the user and the subscribed original dynamic content; and

obtaining the corresponding original dynamic content according to the corresponding relationship, and performing personalized processing on the original dynamic content, and sending the processed dynamic content to the user terminal.

According to the method of the present invention, the process of storing an original dynamic content subscribed by a user comprises the process of storing one unique identification corresponding to each original content.

In the method according to the present invention, the corresponding relationship between the user and the subscribed original dynamic content further comprises: sending mode of the dynamic content set by the user or a server.

In the method according to the present invention, the corresponding relationship between the user and the subscribed original dynamic content is stored in a corresponding relationship table; the corresponding relationship comprising: the user identification and identification of the subscribed original dynamic content by the user; each record in the corresponding relationship table storing one user identification and one identification of the subscribed original dynamic content by the user; and

the process of obtaining the original dynamic content comprises: searching in the corresponding relationship table, obtaining the corresponding original dynamic content identification according to the user identification, and obtaining the original dynamic content corresponding to the original dynamic content identification according to the original dynamic content identification.

The method according to the present invention further includes the processes of:

determining whether the user subscription relationship is valid; if not, deleting the corresponding relationship between the user identification and the identification of subscribed original dynamic content by the user in the corresponding relationship table.

In the method according to the present invention, the corresponding relationship between the user and the subscribed original dynamic content is stored with individual storage spaces; each of the individual storage spaces stores the user identification and the identification of subscribed original dynamic content by the user; and

when sending the subscribed dynamic content to the user, querying the corresponding individual storage space according to the user identification, obtaining the corresponding original dynamic content identification, and obtaining the original dynamic content corresponding to the original dynamic content identification from a content storage and look-up module.

The method according to the present invention further includes the processes of:

determining whether the user subscription relationship is valid; if not, deleting the corresponding relationship between the user identification and the identification of the subscribed dynamic content by the user, stored in the individual storage space corresponding to the user.

The process of performing personalized processing on the original dynamic content is implemented according to the current configuration and state of the user.

In the method according to the present invention, the current configuration and state of the user are obtained from a system server, a presence server and/or a location server.

The present invention provides a dynamic content delivery server, comprising: an input/output interface module, a corresponding relationship storage unit and a module for content personalized processing connected with the input/output interface module respectively, and a content storage and look-up unit connected with the corresponding relationship storage unit and the module for content personalized processing respectively; wherein

the input/output interface module is adapted to receive a dynamic content subscription request originated by a user terminal, and output subscribed dynamic content with personalized processing to the user terminal;

the corresponding relationship storage module, is adapted to create and store corresponding relationship between the user and the subscribed original dynamic content according to the subscribed dynamic content by the user terminal;

the content storage and look-up module, is adapted to store the original dynamic content, subscribed by the user, without personalized processing, obtain the identification of the subscribed original content by the user from the corresponding relationship storage module, search for the original content data stored in the content storage and look-up module according to the obtained identification of original content, and sending the original content data to the module for content personalized processing; and

the module for content personalized processing is adapted to perform personalized processing on the subscribed original dynamic content by the user, and send the dynamic content with personalized processing to the input/output interface module to output.

The corresponding relationship storage module is adapted to store the corresponding relationship table of the user identification and the identification of the subscribed original dynamic content by the user; and

when sending the subscribed dynamic content to the user, searching in the corresponding relationship table, obtaining the corresponding original dynamic content identification according to the user identification, and sending the original dynamic content corresponding to the original dynamic content identification searched in the content storage and look-up module to the module for content personalized processing to perform personalized processing.

The corresponding relationship storage module comprises individual storage spaces, which are adapted to store the user identification and the identification of the subscribed original dynamic content by the user; and

when sending the subscribed dynamic content to the user, searching in the corresponding individual storage space according to the user identification, obtaining the corresponding original dynamic content identification, and sending the original dynamic content corresponding to the original dynamic content identification searched from the content storage and look-up module to the module for content personalized processing to perform personalized processing.

The input/output interface module further comprises a connection interface connected with a network entity, the interface obtaining current configuration and state of the user from the network entity, and sends the current configuration and presence of the user to the module for content personalized processing; the module for content personalized processing performs the personalized processing on the original dynamic content according to the current configuration and state of the user.

The advantageous effect of the technical solution of the present invention includes:

(1) According to the present invention, when a user terminal requests to send the dynamic content, the dynamic content delivery server performs personalized processing on the content subscribed by the user according to the current configuration and the status of the user terminal, and sends the processed content to the user, implementing personalization and practicability of dynamic content delivery.

(2) According to the present invention, a corresponding relationship of the user identification and the identification of the subscribed dynamic content is stored, therefore only one original dynamic content needs to be stored, implementing the original dynamic content share, and decreasing the storage resources for the original dynamic content.

(3) According to the present invention, if the dynamic content has been sent to a user successfully or over, the stored corresponding information is deleted, i.e., the corresponding record is deleted when the subscription relationship ends, which saves storage space and improves maintenance efficiency.

### Brief Description of the Drawings

Figure 1 is a flowchart of the method for sending dynamic content according to the present invention.

Figure 2 is a diagram illustrating the architecture of the dynamic content delivery server according to the present invention.

### Detailed Description of the Invention

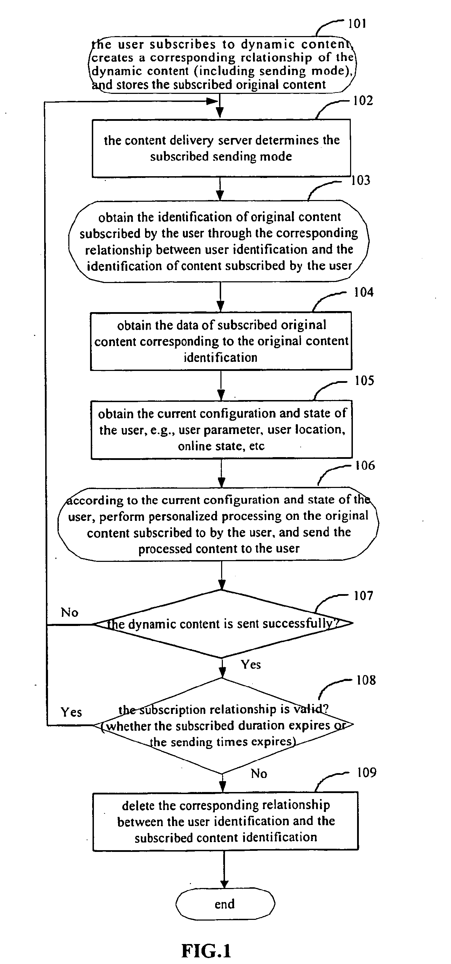

Figure 1 is a flowchart of the method for sending dynamic content according to an embodiment of the present invention, including the processes as follows.

In step 101, according to the dynamic content subscribed to a dynamic content delivery server by a user, a dynamic content delivery server creates a corresponding relationship of the dynamic content. The created corresponding relationship includes at least the corresponding relationship between the user identification (e.g., IMSI, International Mobile Subscriber Identity) and the identification of the dynamic content subscribed by the user. The created corresponding relationship may also include sending mode information of dynamic content set by the user or the server, e.g. the periodical sending mode by the dynamic content delivery server or the sending mode of dynamic message content upon the user requests.

The dynamic content delivery server stores original dynamic contents subscribed by all users, i.e., contents without personalized processing. Wherein, each piece of original dynamic content corresponds to a unique content identification, to identify different original dynamic content.

In step 102, according to the corresponding relationship of the dynamic content, the dynamic content delivery server determines the subscribed sending mode, which may be a periodical sending mode or a sending mode upon the user requests set by the dynamic content delivery server or the user.

In step 103, the dynamic content delivery server obtains the identification of subscribed original content by the user, according to the user identification (e.g., IMSI, International Mobile Subscriber Identity) and the corresponding relationship between the user identification and the identification of subscribed original content by the user.

In step 104, the dynamic content delivery server obtains the data of originally subscribed content corresponding to the original content identification, according to the original content identification.

In step 105, the dynamic content delivery server obtains the current configuration information and state information of the user, e.g., obtains the current location of the user from the location server, obtains the current presence information from the presence server, etc.

In step 106, the dynamic content delivery server performs a personalized processing on the subscribed original content by the user, according to the current configuration information and state information of the user, and sends the processed dynamic content to the user.

In step 107, if the dynamic content is not sent to the user successfully due to reasons, e.g., the user is unreachable, etc., the procedure goes to the step 102, so that the dynamic content is re-personalized and sent to the user according to the subscribed sending mode; if the dynamic content is sent successfully, the procedure goes to the following processes.

In step 108, whether the user subscription relationship is valid, e.g. whether the subscribed duration by the user expires or the subscribed sending times by the user expires, is determined; if not, the procedure goes to step 102, where the dynamic content is re-sent according to the subscribed sending mode; if the subscribed duration by the user expires or the subscribed sending times by the user expires, the procedure goes to step 109.

In step 109, the corresponding relationship between the user identification and the identification of the subscribed original content is deleted; if necessary, the original dynamic contents which are stored in the dynamic content delivery server and not being subscribed by any user are deleted; and the sending flow of dynamic content ends.

In the above procedure, the step 105 doesn't have to be performed after the step 104, but before the step 106. For example, for the sending mode upon user request set by the user, the dynamic content delivery server after receiving the user request obtains the current configuration information and state information of the user immediately, e.g., obtains the current location of the user from the location server, obtains the current presence information from the presence server, etc. In another example, if the periodical sending mode is adapted, when the set sending duration expires, the dynamic content delivery server obtains the current configuration information and state information of the user, e.g., obtains the current location of the user from the location server, obtains the current presence information from the presence server, etc.

In the above method according to the present invention, the corresponding relationship between the user and the subscribed dynamic content may be stored in a corresponding relationship table, in which each record stores at least one user identification and the identification of the subscribed original dynamic content by the user, wherein each dynamic content identification corresponds to an original dynamic content uniquely.

In the above method according to the present invention, the dynamic content delivery server may allocate multiple individual storage spaces to each user. Each individual storage space stores a corresponding relationship between the user identification and the identification of the subscribed dynamic content by the user, wherein each dynamic content identification corresponds to an original dynamic content uniquely.

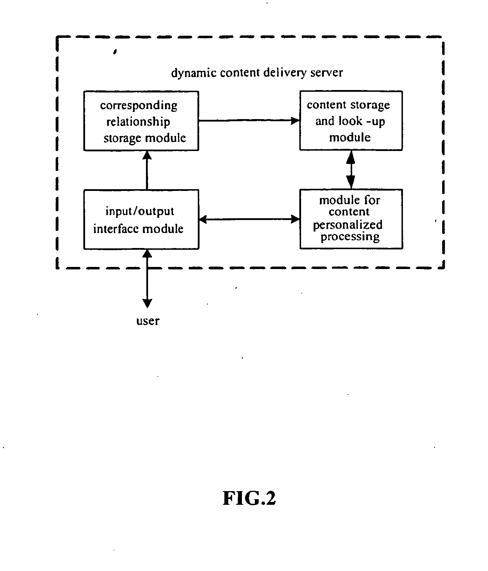

Figure 2 is a diagram illustrating the architecture of the dynamic content delivery server according to an embodiment of the present invention, including: an input/output interface module, a corresponding relationship storage module, a content storage and look-up module, and a module for content personalized processing, wherein the function of each module is as follows.

The input/output interface module is adapted to receive a dynamic content subscription request originated by a user terminal, and output the subscribed dynamic content to the user terminal. The input/output interface module is further provided with a connection interface connected with a network entity, from which the current configuration information and state information of the user is obtained and sent to the module for content personalized processing.

The corresponding relationship storage module is adapted to establish and store the corresponding relationship between the user and the subscribed original dynamic content according to the subscribed dynamic content by the user terminal. The corresponding relationship storage module includes multiple individual storage spaces, and each individual storage space stores a corresponding relationship between the user identification and the identification of the subscribed original dynamic content by the user. The corresponding relationship storage module further stores the corresponding relationship in a form of relationship table, wherein each record of the table stores one user identification and the identification of the subscribed original dynamic content by the user.

The content storage and look-up module is adapted to store original dynamic contents, i.e., contents without personalized processing, subscribed to by all users.

The module for content personalized processing is adapted to perform personalized processing on the subscribed original dynamic contents by the users according to the obtained current configuration information and state information of the user terminal, and transmitted the dynamic content processed in a personalized manner to the user terminal through the input/output interface module.

After the user terminal sends a dynamic content subscription request, the input/output interface module of the dynamic content delivery server receives the subscription request and sends the subscription request to the module for content personalized processing. The module for content personalized processing determines the sending mode of dynamic content according to the received subscription request, e.g., the sending mode upon the user request or the periodical sending mode. When the set duration expires or the user request is sent immediately, the module for content personalized processing sends the user identification to the content storage and look-up module. The content storage and look-up module sends the received user identification to the corresponding relationship storage module, in which the identification of the subscribed original dynamic content by the user corresponding to the user identification is queried and obtained, searches out the original dynamic content according to the obtained the original dynamic content identification, and sends the original dynamic content to the module for content personalized processing; the module for content personalized processing obtains the current configuration information and state information of the user through the input/output interface module, performs personalized processing on the obtained original dynamic content, and sends the dynamic content processed in a personalized manner to the user terminal through the input/output interface module.

The method of the present invention will be described in detail in combination with the following detailed embodiments.

Embodiment one: the dynamic content delivery server sends the dynamic electric map to the user in periodical sending mode.

To obtain the dynamic electric map periodically, the user firstly needs to subscribe to the electric map and choose the sending mode as periodical sending mode by the dynamic content delivery server. Taking an example that the user subscribes to a "map of Shenzhen city", the procedure of user subscription is described as follows.

Firstly, the corresponding relationship between the user and the subscribed original content upon a subscription request from the user is determined; for example, add a record in the corresponding relationship table between the user identification and the identification of the original content, wherein the user identification is IMSI code of the user, IMSI_user1, and the identification of the original content is identification of the subscribed "map of shenzhen city" by the user, ADD_shenzhen.

Then, a sending mode is determined and necessary sending parameters are set upon the subscription request. Here, the user has chosen the sending mode as periodical sending mode by the dynamic content delivery server while subscribing, thus the relative parameters may be subscription duration and sending time interval, or sending times and sending time interval.

The dynamic content delivery server stores the subscribed original content by the user and creates a unique corresponding relationship between the identification of original content and the original content. Particularly, the dynamic content delivery server sets an identification header field for the stored original content, or stores a corresponding relationship table between the identification of original content and the storage address of the original content.

After the user subscription, the dynamic content delivery server begins to send the dynamic content according to the subscription relationship. When the specified time interval expires, the dynamic content delivery server sends the "map of Shenzhen city" to the user with the IMSI code of IMSI_ user1, the particular sending procedure is described as follows.

In step 1-1, the content storage and look-up module in the dynamic content delivery server searches for the identification of subscribed "map of Shenzhen city" by the user with the user identification of IMSI_user1, Add_shenzhen in the corresponding relationship table between the user identification and the original content identification;

In step 1-2, the content storage and look-up module in the dynamic content delivery server searches for the data of "map of Shenzhen city" according to the "map of Shenzhen city" identification of Add_shenzhen, and sends the data together with the user IMSI_user1 code to the module for content personalized processing.

In step 1-3, after receiving the data of "map of Shenzhen city", the module for content personalized processing, according to the user IMSI_user1 code, obtains the current location of the user, Longgang district of Shenzhen city, from the user location server through a connection interface via which the input/output interface module is connected with the user location server; obtains the system time, Greenwich Mean Time 10:00, from the system server through the connection interface via which the input/output interface module is connected with the user location server; and obtains the user local time, 18:00, in combination with the user location (time difference between Shenzhen and Greenwich Mean Time is 8 hours). The module for content personalized processing, according to the user IMSI_user1 code, obtains the current state of the user, driving, from the presence server through the connection interface via which the input/output interface module is connected with the presence server;

In step 1-4, the module for content personalized processing, according to the obtained current location, time and the state information of the user at step 1-3, performs personalized processing on the data of "map of Shenzhen city", obtains the "road and transportation map of the Longgang district of Shenzhen city" after processing, and marks locations of main gas stations, restaurants and auto courts;

In step 1-5, the dynamic content delivery server sends the "road and transportation map of the Longgang district of Shenzhen city" with personalized processing to the user terminal through the input/output interface module.

If the user can't receive the "road and transportation map of the Longgang district of Shenzhen city" successfully due to reasons such as insufficient storage space of the user terminal, the dynamic content delivery server will send the dynamic "map of Shenzhen city" repeatedly according to the above sending procedure at the specified time interval.

After the subscribed duration by the user expires or the subscribed sending times by the user expires, the corresponding relationship storage module deletes the record which includes the corresponding relationship between the user identification of IMSI_user1 and the "map of Shenzhen city" identification of Add_shenzhen.

Original contents, which are not subscribed by all users any more, are deleted from the content storage and look-up unit, and will be stored in the content storage and look-up module when they are subscribed by any user.

In the above procedures, the step 1-3 doesn't have to be performed after the step 1-2, but before the step 1-4.

Embodiment two: the dynamic content delivery server sends the dynamic electric map to the user upon the user request.

Similar to the embodiment one, the dynamic electric map needs to be subscribed by the user before sent. The subscription procedure in the embodiment two is similar to that of the embodiment one. To be different from the embodiment one, the chosen sending mode is a sending mode upon the user request, and the corresponding parameters are subscription duration or/and sending times.

The dynamic content delivery server begins to perform the personalized processing on the dynamic content and sends the processed dynamic content according to the subscription relationship only after receiving the request of obtaining the "map of Shenzhen city" originated by the user terminal. The particular sending procedure is similar to the steps of the above embodiment one, will not be described here.

In conclusion, the present invention performs personalized processing on the subscribed dynamic content by the user according to the current configuration information and state information of the user, according to a subscribed sending mode by the user or a sending mode set by the dynamic content delivery server, and send the processed dynamic content to the user, implementing personalization of the subscribed content, and improving service feelings of the user.

## Claims

1. A method for sending dynamic content, comprising:
storing an original dynamic content subscribed to by a user;
creating and storing a corresponding relationship between the user and the subscribed original dynamic content; and
obtaining (104) the original dynamic content according to the corresponding relationship, performing (106) personalized processing on the original dynamic content according to current configuration and state of the user, and sending (106) the processed dynamic content to the user;
wherein the process of storing an original dynamic content subscribed to by a user comprises the process of storing one unique identification corresponding to each original dynamic content; wherein the corresponding relationship between the user and the subscribed original dynamic content is stored in a corresponding relationship table; the corresponding relationship comprising: the user identification and identification of the subscribed original dynamic content by the user;
the process of obtaining (104) the original dynamic content comprises: searching in the corresponding relationship table, obtaining the corresponding original dynamic content identification according to the user identification, and obtaining the original dynamic content corresponding to the original dynamic content identification;
wherein the method further comprises: deleting (109) the corresponding relationship between the user identification and the identification of subscribed original dynamic content by the user in the corresponding relationship table if the user subscription relationship is invalid.

2. The method according to claim 1, wherein the corresponding relationship between the user and the subscribed original dynamic content further comprises: sending mode of the dynamic content set by the user or a server.

3. The method according to claim 1 or 2, wherein the current configuration and state of the user are obtained from a system server, a presence server and/or a location server.

4. A method for sending dynamic content, comprising:
storing an original dynamic content subscribed to by a user;
creating and storing a corresponding relationship between the user and the subscribed original dynamic content; and
obtaining (104) the original dynamic content according to the corresponding relationship, performing (106) personalized processing on the original dynamic content according to current configuration and state of the user, and sending (106) the processed dynamic content to the user;
wherein the process of storing an original dynamic content subscribed to by a user comprises the process of storing one unique identification corresponding to each original dynamic content; wherein the corresponding relationship between the user and the subscribed original dynamic content is stored with individual storage spaces; each of the individual storage spaces stores the user identification and the identification of subscribed original dynamic content by the user;
the process of obtaining (104) the original dynamic content comprises: when sending the subscribed dynamic content to the user, querying the corresponding individual storage space according to the user identification, obtaining the corresponding original dynamic content identification, and obtaining the original dynamic content corresponding to the original dynamic content identification from a content storage and look-up module;
wherein the method further comprises: deleting (109) the corresponding relationship between the user identification and the identification of the subscribed dynamic content by the user stored in the individual storage space corresponding to the user if the user subscription relationship is invalid.

5. The method according to claim 4, wherein the corresponding relationship between the user and the subscribed original dynamic content further comprises: sending mode of the dynamic content set by the user or a server.

6. The method according to claim 4 or 5, wherein the current configuration and state of the user are obtained from a system server, a presence server and/or a location server.

7. A dynamic content delivery server, comprising:
an input/output interface module, adapted to receive a dynamic content subscription request originated by a user terminal, and outputting subscribed dynamic content with personalized processing to the user;
a corresponding relationship storage module, adapted to: create and store corresponding relationship between the user and the subscribed original dynamic content according to the dynamic content subscribed to by the user in a corresponding relationship table of user identifications and identifications of subscribed original dynamic content; and when the subscribed dynamic content is sent to the user, search in the corresponding relationship table, obtain the corresponding original dynamic content identification according to a user identification, and send the original dynamic content corresponding to the original dynamic content identification searched in a content storage and look-up module to a module for content personalized processing to perform personalized processing;
the content storage and look-up module, adapted to store the original dynamic content, subscribed to by the user, without personalized processing, obtain the original dynamic content identification , search for the original content data stored in the content storage and look-up module according to the original dynamic content identification; and
the module for content personalized processing, adapted to perform personalized processing, according to current configuration and state of the user, on the original dynamic content subscribed to by the user stored in the content storage and look-up module;
wherein the corresponding relationship storage module is further adapted to delete the corresponding relationship between the user identification and the identification of subscribed original dynamic content by the user in the corresponding relationship table if the user subscription relationship is invalid.

8. A dynamic content delivery server, comprising:
an input/output interface module, adapted to receive a dynamic content subscription request originated by a user terminal, and outputting subscribed dynamic content with personalized processing to the user;
a corresponding relationship storage module, adapted to: create and store corresponding relationship between the user and the subscribed original dynamic content according to the dynamic content subscribed to by the user; wherein the corresponding relationship storage module comprises individual storage spaces adapted to store a user identification and an identification of the subscribed original dynamic content, and the corresponding relationship storage module is further adapted to: when sending the subscribed dynamic content to the user, search in the corresponding individual storage space according to the user identification, obtain the corresponding original dynamic content identification, and send the original dynamic content corresponding to the original dynamic content identification searched from the content storage and look-up module to the module for content personalized processing to perform personalized processing;
the content storage and look-up module, adapted to store the original dynamic content, subscribed to by the user, without personalized processing, obtain the original dynamic content identification , search for the original content data stored in the content storage and look-up module according to the original dynamic content identification; and
the module for content personalized processing, adapted to perform personalized processing, according to current configuration and state of the user, on the original dynamic content subscribed to by the user stored in the content storage and look-up module;
wherein the corresponding relationship storage module is further adapted to delete the corresponding relationship between the user identification and the identification of the subscribed dynamic content stored in the individual storage space corresponding to the user if the user subscription relationship is invalid.

9. The dynamic content delivery server according to claim 7 or 8, wherein the input/output interface module further comprises a connection interface connected with a network entity, the interface obtaining the current configuration and the state of the user from the network entity, and sends the current configuration and state of the user to the module for content personalized processing; the module for content personalized processing performs the personalized processing on the original dynamic content according to the current configuration and state of the user.

## Patentansprüche

1. Verfahren zum Senden von dynamischem Inhalt, mit den folgenden Schritten:
Speichern eines von einem Benutzer subskribierten ursprünglichen dynamischen Inhalts;
Erzeugen und Speichern einer Korrespondenzbeziehung zwischen dem Benutzer und dem subskribierten ursprünglichen dynamischen Inhalt; und
Erhalten (104) des ursprünglichen dynamischen Inhalts gemäß der Korrespondenzbeziehung, Ausführen (106) von personalisierter Verarbeitung an dem ursprünglichen dynamischen Inhalt gemäß aktueller Konfiguration und Zustand des Benutzers und Senden (106) des verarbeiteten dynamischen Inhalts zu dem Benutzer;
wobei der Prozess des Speicherns eines von einem Benutzer subskribierten ursprünglichen dynamischen Inhalts den Prozess des Speicherns einer einzigartigen Identifikation entsprechend jedem ursprünglichen dynamischen Inhalt umfasst; wobei die Korrespondenzbeziehung zwischen dem Benutzer und dem subskribierten ursprünglichen dynamischen Inhalt in einer Korrespondenzbeziehungstabelle gespeichert wird; wobei die Korrespondenzbeziehung Folgendes umfasst: die Benutzeridentifikation und Identifikation des subskribierten ursprünglichen dynamischen Inhalts durch den Benutzer;
der Prozess des Erhaltens (104) des ursprünglichen dynamischen Inhalts Folgendes umfasst: Suchen in der Korrespondenzbeziehungstabelle, Erhalten der entsprechenden Identifikation des ursprünglichen dynamischen Inhalts gemäß der Benutzeridentifikation und Erhalten des ursprünglichen dynamischen Inhalts, der der Identifikation des ursprünglichen dynamischen Inhalts entspricht;
wobei das Verfahren ferner Folgendes umfasst: Löschen (109) der Korrespondenzbeziehung zwischen der Benutzeridentifikation und der Identifikation von subskribiertem ursprünglichem dynamischem Inhalt durch den Benutzer in der Korrespondenzbeziehungstabelle, wenn die Benutzersubskriptionsbeziehung ungültig ist.

2. Verfahren nach Anspruch 1, wobei die Korrespondenzbeziehung zwischen dem Benutzer und dem subskribierten ursprünglichen dynamischen Inhalt ferner Folgendes umfasst: Sendemodus des dynamischen Inhalts, der durch den Benutzer oder einen Server eingestellt wird.

3. Verfahren nach Anspruch 1 oder 2, wobei die aktuelle Konfiguration und der Zustand des Benutzers von einem Systemserver, einem Präsentserver und/oder einem Ortsserver erhalten werden.

4. Verfahren zum Senden von dynamischem Inhalt, mit den folgenden Schritten:
Speichern eines von einem Benutzer subskribierten ursprünglichen dynamischen Inhalts;
Erzeugen und Speichern einer Korrespondenzbeziehung zwischen dem Benutzer und dem subskribierten ursprünglichen dynamischen Inhalt; und
Erhalten (104) des ursprünglichen dynamischen Inhalts gemäß der Korrespondenzbeziehung, Ausführen (106) von personalisierter Verarbeitung an dem ursprünglichen dynamischen Inhalt gemäß aktueller Konfiguration und Zustand des Benutzers und Senden (106) des verarbeiteten dynamischen Inhalts zu dem Benutzer;
wobei der Prozess des Speicherns eines von einem Benutzer subskribierten ursprünglichen dynamischen Inhalts den Prozess des Speicherns einer einzigartigen Identifikation entsprechend jedem ursprünglichen dynamischen Inhalt umfasst; wobei die Korrespondenzbeziehung zwischen dem Benutzer und dem subskribierten ursprünglichen dynamischen Inhalt mit individuellen Speicherplätzen gespeichert wird; und jeder der individuellen Speicherplätze die Benutzeridentifikation und die Identifikation des subskribierten ursprünglichen dynamischen Inhalts durch den Benutzer speichert;
der Prozess des Erhaltens (104) des ursprünglichen dynamischen Inhalts Folgendes umfasst: beim Senden des subskribierten dynamischen Inhalts zu dem Benutzer, Abfragen des entsprechenden individuellen Speicherplatzes gemäß der Benutzeridentifikation, Erhalten der entsprechenden Identifikation des ursprünglichen dynamischen Inhalts und Erhalten des ursprünglichen dynamischen Inhalts, der der Identifikation des ursprünglichen dynamischen Inhalts entspricht, von einem Inhaltsspeicher- und Nachschlagemodul;
wobei das Verfahren ferner Folgendes umfasst: Löschen (109) der Korrespondenzbeziehung zwischen der Benutzeridentifikation und der Identifikation des subskribierten dynamischen Inhalts durch den Benutzer, die in dem individuellen Speicherplatz entsprechend dem Benutzer gespeichert ist, wenn die Benutzersubskriptionsbeziehung ungültig ist.

5. Verfahren nach Anspruch 4, wobei die Korrespondenzbeziehung zwischen dem Benutzer und dem subskribierten ursprünglichen dynamischen Inhalt ferner Folgendes umfasst: Sendemodus des dynamischen Inhalts, der durch den Benutzer oder einen Server eingestellt wird.

6. Verfahren nach Anspruch 4 oder 5, wobei die aktuelle Konfiguration und der Zustand des Benutzers von einem Systemserver, einem Präsentserver und/oder einem Ortsserver erhalten werden.

7. Server zur Ablieferung von dynamischem Inhalt, umfassend:
ein Eingangs-/Ausgangsschnittstellenmodul, das dafür ausgelegt ist, eine von einem Benutzerendgerät originierte Subskriptionsanforderung dynamischen Inhalts zu empfangen und subskribierten dynamischen Inhalt mit personalisierter Verarbeitung an den Benutzer auszugeben;
ein Korrespondenzbeziehungs-Speichermodul, das für Folgendes ausgelegt ist: Erzeugen und Speichern einer Korrespondenzbeziehung zwischen dem Benutzer und dem subskribierten ursprünglichen dynamischen Inhalt gemäß dem von dem Benutzer subskribierten dynamischen Inhalt in einer Korrespondenzbeziehungstabelle von Benutzeridentifikationen und Identifikationen von subskribiertem ursprünglichem dynamischem Inhalt; und wenn der subskribierte dynamische Inhalt zu dem Benutzer gesendet wird, Suchen in der Korrespondenzbeziehungstabelle, Erhalten der entsprechenden Identifikation des ursprünglichen dynamischen Inhalts gemäß einer Benutzeridentifikation und Senden des ursprünglichen dynamischen Inhalts, der der Identifikation des ursprünglichen dynamischen Inhalts entspricht, die in einem Inhaltsspeicher- und Nachschlagemodul gesucht wurde, zu einem Modul zur inhaltspersonalisierten Verarbeitung, um personalisierte Verarbeitung auszuführen;
das Inhaltsspeicher- und Nachschlagemodul, das dafür ausgelegt ist, den von dem Benutzer subskribierten ursprünglichen dynamischen Inhalt ohne personalisierte Verarbeitung zu speichern, die Identifikation des ursprünglichen dynamischen Inhalts zu erhalten und gemäß der Identifikation des ursprünglichen dynamischen Inhalts nach den in dem Inhaltsspeicher- und Nachschlagemodul gespeicherten ursprünglichen Inhaltsdaten zu suchen; und
das Modul zur inhaltspersonalisierten Verarbeitung, das dafür ausgelegt ist, personalisierte Verarbeitung gemäß aktueller Konfiguration und Zustand des Benutzers an dem in dem Inhaltsspeicher- und Nachschlagemodul gespeicherten von dem Benutzer subskribierten ursprünglichen dynamischen Inhalt auszuführen;
wobei das Korrespondenzbeziehungs-Speichermodul ferner dafür ausgelegt ist, die Korrespondenzbeziehung zwischen der Benutzeridentifikation und der Identifikation von subskribiertem ursprünglichem dynamischem Inhalt durch den Benutzer in der Korrespondenzbeziehungstabelle zu löschen, wenn die Benutzersubskriptionsbeziehung ungültig ist.

8. Server zum Abliefern von dynamischem Inhalt, umfassend:
ein Eingangs-/Ausgangsschnittstellenmodul, das dafür ausgelegt ist, eine von einem Benutzerendgerät originierte Subskriptionsanforderung dynamischen Inhalts zu empfangen und subskribierten dynamischen Inhalt mit personalisierter Verarbeitung an den Benutzer auszugeben;
ein Korrespondenzbeziehungs-Speichermodul, das für Folgendes ausgelegt ist: Erzeugen und Speichern einer Korrespondenzbeziehung zwischen dem Benutzer und dem subskribierten ursprünglichen dynamischen Inhalt gemäß dem von dem Benutzer subskribierten dynamischen Inhalt; wobei das Korrespondenzbeziehungs-Speichermodul individuelle Speicherplätze umfasst, die dafür ausgelegt sind, eine Benutzeridentifikation und eine Identifikation des subskribierten ursprünglichen dynamischen Inhalts zu speichern, und das Korrespondenzbeziehungs-Speichermodul ferner für Folgendes ausgelegt ist: beim Senden des subskribierten dynamischen Inhalts zu dem Benutzer, Suchen in dem entsprechenden individuellen Speicherplatz gemäß der Benutzeridentifikation, Erhalten der entsprechenden Identifikation des ursprünglichen dynamischen Inhalts und Senden des ursprünglichen dynamischen Inhalts, der der aus dem Inhaltsspeicher- und
Nachschlagemodul herausgesuchten Identifikation des ursprünglichen dynamischen Inhalts entspricht, zu dem Modul für inhaltspersonalisierte Verarbeitung, um personalisierte Verarbeitung auszuführen;
das Inhaltsspeicher- und Nachschlagemodul, das dafür ausgelegt ist, den ursprünglichen dynamischen Inhalt, der von dem Benutzer subskribiert wird, ohne personalisierte Verarbeitung zu speichern, die Identifikation des ursprünglichen dynamischen Inhalts zu erhalten und gemäß der Identifikation des ursprünglichen dynamischen Inhalts in dem Inhaltsspeicher- und Nachschlagemodul nach den ursprünglichen Inhaltsdaten zu suchen; und
das Modul zur inhaltspersonalisierten Verarbeitung, das dafür ausgelegt ist, personalisierte Verarbeitung gemäß aktueller Konfiguration und Zustand des Benutzers an dem in dem Inhaltsspeicher- und Nachschlagemodul gespeicherten von dem Benutzer subskribierten ursprünglichen dynamischen Inhalt auszuführen;
wobei das Korrespondenzbeziehungs-Speichermodul ferner dafür ausgelegt ist, die Korrespondenzbeziehung zwischen der Benutzeridentifikation und der Identifikation des subskribierten dynamischen Inhalts, die in dem individuellen Speicherplatz entsprechend dem Benutzer gespeichert ist, zu löschen, wenn die Benutzersubskriptionsbeziehung ungültig ist.

9. Server zur Ablieferung von dynamischem Inhalt nach Anspruch 7 oder 8, wobei das Eingangs-/Ausgangsschnittstellenmodul ferner eine mit einer Netzwerkentität verbundene Verbindungsschnittstelle umfasst, wobei die Schnittstelle die aktuelle Konfiguration und den Zustand des Benutzers aus der Netzwerkentität erhält und die aktuelle Konfiguration und den Zustand des Benutzers zu dem Modul zu der inhaltspersonalisierten Verarbeitung sendet; und das Modul zur inhaltspersonalisierten Verarbeitung die personalisierte Verarbeitung an dem ursprünglichen dynamischen Inhalt gemäß der aktuellen Konfiguration und dem Zustand des Benutzers ausführt.

## Revendications

1. Procédé d'envoi de contenu dynamique, comprenant :
la mémorisation d'un contenu dynamique d'origine souscrit par un utilisateur;
la création et la mémorisation d'une relation correspondante entre l'utilisateur et le contenu dynamique d'origine souscrit ; et
l'obtention (104) du contenu dynamique d'origine en fonction de la relation correspondante, l'exécution (106) d'un traitement personnalisé sur le contenu dynamique d'origine en fonction de la configuration et de l'état courants de l'utilisateur, et l'envoi (106) du contenu dynamique traité à l'utilisateur ;
le processus de mémorisation d'un contenu dynamique d'origine souscrit par un utilisateur comprenant le processus de mémorisation d'une identification unique correspondant à chaque contenu dynamique d'origine ; la relation correspondante entre l'utilisateur et le contenu dynamique d'origine souscrit étant mémorisée dans une table de relations correspondante ; la relation correspondante comprenant :
l'identification d'utilisateur et l'identification du contenu dynamique d'origine souscrit par l'utilisateur ;
le processus d'obtention (104) du contenu dynamique d'origine comprend : la recherche dans la table de relations correspondante, l'obtention de l'identification de contenu dynamique d'origine correspondante en fonction de l'identification d'utilisateur et l'obtention du contenu dynamique d'origine correspondant à l'identification de contenu dynamique d'origine ;
le procédé comprenant en outre : la suppression (109) de la relation correspondante entre l'identification d'utilisateur et l'identification du contenu dynamique d'origine souscrit par l'utilisateur dans la table de relations correspondante si la relation de souscription de l'utilisateur n'est pas valable.

2. Procédé selon la revendication 1, dans lequel la relation correspondante entre l'utilisateur et le contenu dynamique d'origine souscrit comprend en outre : le mode d'envoi du contenu dynamique défini par l'utilisateur ou un serveur.

3. Procédé selon la revendication 1 ou 2, dans lequel la configuration et l'état courants de l'utilisateur sont obtenus depuis un serveur de système, un serveur de présence et/ou un serveur de position.

4. Procédé d'envoi d'un contenu dynamique, comprenant :
la mémorisation d'un contenu dynamique d'origine souscrit par un utilisateur ;
la création et la mémorisation d'une relation correspondante entre l'utilisateur et le contenu dynamique d'origine souscrit ; et
l'obtention (104) du contenu dynamique d'origine en fonction de la relation correspondante, l'exécution (106) d'un traitement personnalisé sur le contenu dynamique d'origine en fonction de la configuration et de l'état courants de l'utilisateur, et l'envoi (106) du contenu dynamique traité à l'utilisateur ;
le processus de mémorisation d'un contenu dynamique d'origine souscrit par un utilisateur comprenant le processus de mémorisation d'une identification unique correspondant à chaque contenu dynamique d'origine ; la relation correspondante entre l'utilisateur et le contenu dynamique d'origine souscrit étant mémorisée avec des emplacements de mémorisation individuels ; chacun des emplacements de mémorisation individuels mémorisant l'identification d'utilisateur et l'identification du contenu dynamique d'origine souscrit par l'utilisateur ;
le processus d'obtention (104) du contenu dynamique d'origine comprend : à l'envoi du contenu dynamique souscrit à l'utilisateur, l'interrogation de l'emplacement de mémorisation individuel correspondant en fonction de l'identification d'utilisateur, l'obtention de l'identification de contenu dynamique d'origine correspondante, et l'obtention du contenu dynamique d'origine correspondant à l'identification de contenu dynamique d'origine depuis un module de mémorisation et de consultation de contenu ;
le procédé comprenant en outre : la suppression (109) de la relation correspondante entre l'identification d'utilisateur et l'identification du contenu dynamique souscrit par l'utilisateur mémorisée dans l'emplacement de mémorisation individuel correspondant à l'utilisateur si la relation de souscription de l'utilisateur n'est pas valable.

5. Procédé selon la revendication 4, dans lequel la relation correspondante entre l'utilisateur et le contenu dynamique d'origine souscrit comprend en outre : le mode d'envoi du contenu dynamique défini par l'utilisateur ou un serveur.

6. Procédé selon la revendication 4 ou 5, dans lequel la configuration et l'état courants de l'utilisateur sont obtenus depuis un serveur de système, un serveur de présence et/ou un serveur de position.

7. Serveur de délivrance de contenu dynamique, comprenant :
un module d'interface d'entrée/sortie, adapté pour recevoir une demande d'abonnement de contenu dynamique lancée par un terminal utilisateur, et produisant en sortie un contenu dynamique souscrit au traitement personnalisé à l'intention de l'utilisateur ;
un module de mémorisation de relation correspondante, adapté pour : créer et mémoriser une relation correspondante entre l'utilisateur et le contenu dynamique d'origine souscrit en fonction du contenu dynamique souscrit par l'utilisateur dans une table de relations correspondante d'identifications d'utilisateurs et d'identifications de contenus dynamiques d'origine souscrits ; et quand le contenu dynamique souscrit est envoyé à l'utilisateur, la recherche dans la table de relations correspondante, l'obtention de l'identification de contenu dynamique d'origine correspondante en fonction d'une identification d'utilisateur, et l'envoi du contenu dynamique d'origine correspondant à l'identification de contenu dynamique d'origine recherchée dans un module de mémorisation et de consultation de contenu à un module de traitement personnalisé de contenu en vue d'effectuer un traitement personnalisé ;
le module de mémorisation et de consultation de contenu, adapté pour mémoriser le contenu dynamique d'origine souscrit par l'utilisateur, sans traitement personnalisé, obtenir l'identification du contenu dynamique d'origine, rechercher les données de contenu d'origine mémorisées dans le module de mémorisation et de consultation de contenu en fonction de l'identification du contenu dynamique d'origine ; et
le module de traitement personnalisé de contenu, adapté pour effectuer un traitement personnalisé, en fonction de la configuration et de l'état courants de l'utilisateur, sur le contenu dynamique d'origine souscrit par l'utilisateur mémorisé dans le module de mémorisation et de consultation de contenu ;
dans lequel le module de mémorisation de relation correspondante est adapté en outre pour supprimer la relation correspondante entre l'identification d'utilisateur et
l'identification du contenu dynamique d'origine souscrit par l'utilisateur dans la table de relations correspondante si la relation de souscription d'utilisateur n'est pas valable.

8. Serveur de délivrance de contenu dynamique, comprenant :
un module d'interface d'entrée/sortie, adapté pour recevoir une demande d'abonnement de contenu dynamique lancée par un terminal utilisateur, et produisant en sortie un contenu dynamique souscrit au traitement personnalisé à l'intention de l'utilisateur ;
un module de mémorisation de relation correspondante, adapté pour : créer et mémoriser une relation correspondante entre l'utilisateur et le contenu dynamique d'origine souscrit en fonction du contenu dynamique souscrit par l'utilisateur, le module de mémorisation de relation correspondante comprenant des emplacements de mémorisation individuels adaptés pour mémoriser une identification d'utilisateur et une identification du contenu dynamique d'origine souscrit, et le module de mémorisation de relation correspondante étant en outre adapté pour : à l'envoi du contenu dynamique souscrit à l'utilisateur, rechercher dans l'emplacement de mémorisation individuel correspondant en fonction de l'identification d'utilisateur, obtenir l'identification de contenu dynamique d'origine correspondante, et envoyer le contenu dynamique d'origine correspondant à l'identification de contenu dynamique d'origine recherchée dans le module de mémorisation et de consultation de contenu au module de traitement personnalisé de contenu afin d'effectuer un traitement personnalisé ;
le module de mémorisation et de consultation de contenu, adapté pour mémoriser le contenu dynamique d'origine souscrit par l'utilisateur, sans traitement personnalisé, obtenir l'identification du contenu dynamique d'origine, rechercher les données de contenu d'origine mémorisées dans le module de mémorisation et de consultation de contenu en fonction de l'identification du contenu dynamique d'origine ; et
le module de traitement personnalisé de contenu, adapté pour effectuer un traitement personnalisé, en fonction de la configuration et de l'état courants de l'utilisateur, sur le contenu dynamique d'origine souscrit par l'utilisateur mémorisé dans le module de mémorisation et de consultation de contenu ;
le module de mémorisation de relation correspondante étant adapté en outre pour supprimer la relation correspondante entre l'identification d'utilisateur et l'identification du contenu dynamique souscrit mémorisée dans l'emplacement de mémorisation individuel correspondant à l'utilisateur si la relation de souscription d'utilisateur n'est pas valable.

9. Serveur de délivrance de contenu dynamique selon la revendication 7 ou 8, dans lequel le module d'interface d'entrée/sortie comprend en outre une interface de connexion connectée à une entité de réseau, l'interface obtenant la configuration et l'état courants de l'utilisateur depuis l'entité de réseau, et envoie la configuration et l'état courants de l'utilisateur au module de traitement personnalisé de contenu ; le module de traitement personnalisé de contenu effectuant le traitement personnalisé sur le contenu dynamique d'origine en fonction de la configuration et l'état courants de l'utilisateur.
